# EUROPEAN PATENT SPECIFICATION

(11) **EP 1 142 338 B1**
(45) Date of publication and mention of the grant of the patent: **13.11.2002**
(21) Application number: 99962445.5
(22) Date of filing: 23.12.1999
(51) Int. Cl.: H04N 7/173

(54) **USER GROUP IDENTIFICATION SYSTEM**
ANWENDERGRUPPEN-IDENTIFIZIERUNGS-SYSTEM
SYSTEME D'IDENTIFICATION DE GROUPES D'UTILISATEURS

(30) Priority: 23.12.1998 GB 9828594
(43) Date of publication of application: 10.10.2001
(73) Proprietor: NTL Group Limited, Hook, Hampshire RG27 9UP (GB)
(72) Inventor: LANG, Jack Arnold, Hook, Hampshire RG27 9UP (GB); STRICK, Michael, Hook, Hampshire RG27 9UP (GB)
(74) Representative: Luckhurst, Anthony Henry William
(86) International application number: GB9904409
(87) International publication number: WO00040027

(56) References cited:
- EP-A- 0 594 350
- EP-A- 0 620 689
- WO-A-97/49242
- WO-A-98/37696
- US-A- 5 473 609
- PATENT ABSTRACTS OF JAPAN vol. 1998, no. 11, 30 September 1998 (1998-09-30) & JP 10 162028 A (SONY CORP), 19 June 1998 (1998-06-19)

## Description

The present invention generally relates to systems for the identification of groups of users of home entertainment apparatus. More particularly it is concerned with identifying groups of users sharing similar programme preferences.

Until recently conventional televisions have been able to receive only a relatively limited number of channels of programmes. Typically terrestrial television broadcasting has provided 4 or 5 channels, satellite broadcasting of the order of a dozen channels and cable television broadcasting a few tens of channels. With the advent of new forms of programme delivery such as digital terrestrial television (DTT), digital satellite television, web casting - delivery of programmes over the Internet - and video-on-demand (VOD) and near video-on-demand (NVOD) the number of available television channels is predicted to grow dramatically. Consumers will be able to choose from many thousands of programmes or programme clips, which could include daily video magazines, regularly updated news from hundreds of sources around the globe, music tracks and videos, games and films. Newer PC-TVs and set-top-boxes (STBs) have the ability to store programmes on an internal hard disk for viewing later and to access webcast video over the Internet, as well as having the capability to receive many hundreds of channels of broadcast material and NVOD movies. Thus consumers will be faced with an overwhelming choice of viewing.

Television viewers exhibit both "push" and "pull" behaviour. In push behaviour a passive viewer selects a channel, typically by editorial style much as one might choose a newspaper, and is essentially passive thereafter. Pull behaviour is where a viewer deliberately chooses or "pulls" a desired programme, for example a video, soap, sporting fixture or well-advertised/trailed programme. Viewers may even pay for such material.

The various aspects of the present invention are aimed at better utilisation of the plethora of information derivable, directly and indirectly, from viewers and at providing viewers with useful and/or interesting information as well as new modes of interpersonal communication and interaction.

EP-A-0 878 964 describes a virtual information selection system with means for identifying and learning of preferences of an information consumer, however the system does not identify groups of users sharing similar programme preferences.

WO-A-98 37696 describes that in a broadcast data distribution system, which provides personal channels, for each subscriber a target profile interest summary describing the subscriber's interest level in various types of programmes is determined.

According to one aspect of the present invention there is provided a method of identifying a group of users of an EPG system sharing similar characteristics to a first user. The EPG system provides a home entertainment device with a personal channel comprising a schedule of programmes and corresponding start times, the programmes being selected from programmes available from a plurality of real channels and/or other programme sources. The system includes means for a user to choose a programme for scheduling. The method comprises the steps of: i) adding the first user to the group; ii) receiving programme choice information from the first user; iii) receiving programme choice information from another user; iv) comparing the programme choice information of the first user with that of the other user to determine an overlap; v) if the overlap exceeds a predetermined value, adding the other user to the group; and vi) repeating steps (iii) to (v) to build up the group of users. Preferably the home entertainment device is a television.

According to a second aspect of the invention there is provided a method of identifying a group of users of an apparatus sharing similar characteristics to a first user. The apparatus provides a home entertainment device with a virtual channel comprising a schedule of programmes and corresponding start times, the programmes being selected from programmes available on a plurality of real channels and/or other programme sources. The apparatus including data input/output means to transmit and receive channel schedule and/or preference information to and from a destination remote from the apparatus, and input means, to receive preference information characterising a user's preferred programmes. The method comprises the steps of: i) adding the first user to the group; ii) receiving preference information from the first user; iii)receiving preference information from another user; iv) comparing the preference information of the first user with that of the other user to determine a preference overlap; v) if the preference overlap exceeds a predetermined value, adding the other user to the group; and vi) repeating steps (iii) to (v) to build up the group of users. Preferably the home entertainment device is a television.

The first user programme choice or preference information may be replaced by predetermined user choice or preference information to identify a group of users sharing at least a portion of the predetermined information.

A programme selection made by the majority of the group may be suggested to those members of the group not having previously made such a selection. Members of a group who so elect may be placed in contact with on another, for example, by exchange of e-mail addresses or by admission to an electronic chat session.

The methods are suitable for use with a system for providing a home entertainment device with a personal channel, the personal channel comprising a schedule of programmes and corresponding start times, the programmes being selected from programmes available on a plurality of real channels and/or other programme sources, the apparatus comprising: database interface means to communicate with a programme database comprising programme information for a plurality of programmes, including for each programme the programme start time, a real channel or other programme source the programme is available from at that start time, and programme descriptor information characterising the content of the programme; input means, to receive preference information characterising an individual user's preferred programmes; automatic scheduling means coupled to the database interface means to receive the programme information, to operate on the preference information and programme descriptor information to automatically generate schedule information for a personal channel for the user, the schedule information comprising, for each scheduled programme, programme start time information and information identifying a real channel or other programme source from which the programme is available at that start time; control means to control a programme reception device using the personal channel schedule information to select and receive, at the scheduled start time, the real channel or programme source corresponding to the scheduled programme; and
output means to provide scheduled programmes thus received to the home entertainment device such that the personal channel is selectable by a user of the home entertainment device in a similar way as a real programme channel. In particular, wherein the input means comprises a user interface for user input of the preference information, the user interface being configured to allow a user to input a preference weighting for each of a plurality of predetermined program descriptors, and further comprising display means to display a personal channel schedule corresponding to the user's preferences, whereby the user is able to interactively define a personal channel; and/or wherein the user interface is further configured for input of preference information comprising information characterising the user's preference for particular selected programmes; and/or wherein a predetermined program descriptor comprises a set of keywords, and further comprising means to download a set of keywords to the apparatus; and/or wherein the user interface further comprises means for a user to define a program descriptor and/or keyword; and/or further comprising user profile input means to define a program descriptor and/or keyword.

These and other aspects of the invention will now be described, by way of example only, with reference to the accompanying drawings in which:
Figure 1 shows a block diagram of apparatus embodying the present invention;
Figure 2 conceptually illustrates the concept of a virtual channel;
Figure 3 shows an on-screen electronic programme guide for a virtual channel;
Figure 4 shows a relational database for storing programme data;
Figure 5 shows a user interface for searching the database of Figure 4;
Figure 6 shows a block diagram of software modules for an electronic programme scheduling system; and
Figure 7 shows, schematically, parts of a user interface.

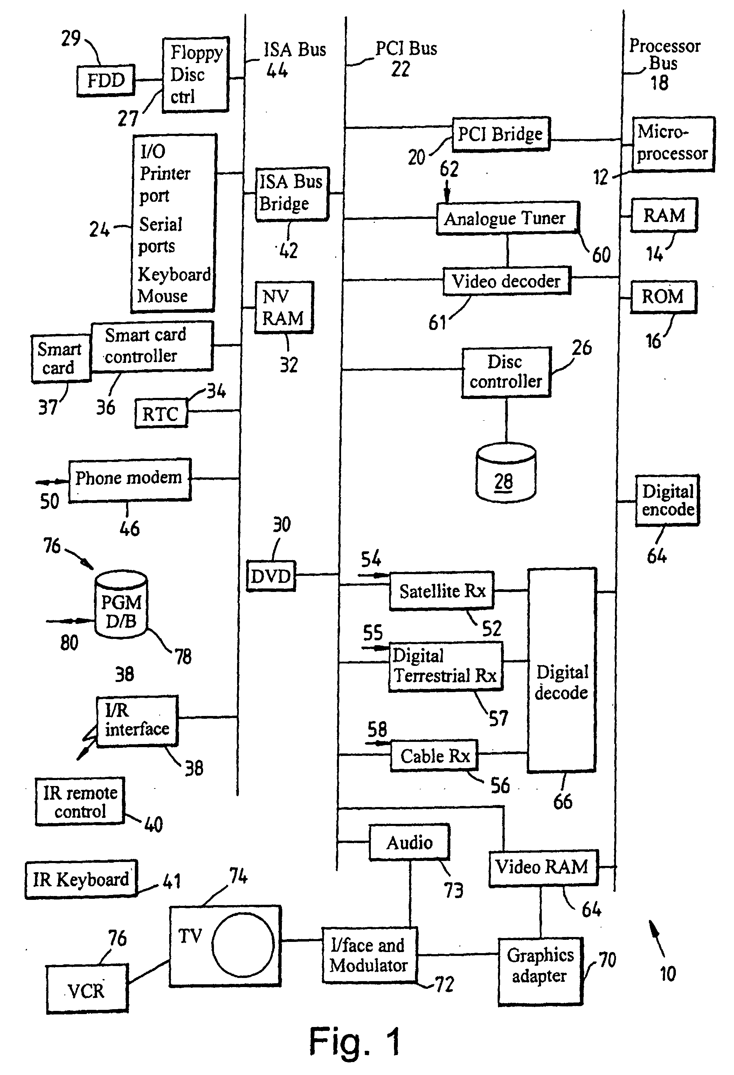

Figure 1 shows one example of an electronic programme guide (EPG) system which is suitable for providing a home entertainment device, such as a television, with a personal channel. An EPG is, generally speaking, an application resident on a set top box designed to aid the viewer in the navigation of and selection from broadcast material available in a digital TV environment. A virtual personal channel comprises, generally speaking a preferably seamless schedule of material from any available broadcast channels, automatically selected for maximum relevance to a set of parameters defined by the viewer. A set top box automatically re-tunes to each broadcast channel as required, providing the effect of a single channel. A virtual fixed-list channel comprises a schedule of material from any available broadcast channels, individually chosen by a user, TV critic, advertiser or the like.

Logically the system is located between a programme source such as a terrestrial television programme transmitter and a television receiver; physically it may be incorporated within a television set. In outline it is based upon hardware corresponding to a conventional personal computer system with the addition of components for television programme reception and processing and modifications to enable the computer to be embedded in a conventional set top box (STB) with infrared remote control. Much of the functionality is provided by firmware stored in read only memory (ROM), although the program could be stored on hard disk, where the STB is so equipped, and executed from random access memory (RAM). The configuration of the computer system can be varied to suit the level of desired functionality. The illustrated system is suitable for a processor which performs multimedia operations (such as a Pentium with MMX) but a simpler microcontroller could be used and the basic functionality required of the system could even be provided by dedicated hardware. The skilled person will recognise that many variations to the illustrative hardware can be made according to cost, component availability, system functionality and other considerations. Although the system will be described as providing programmes to a television, it is suitable for use with any home entertainment device such as a VCR or DVD recorder and, in general, any programme receiving device.

In Figure 1 the set top box is generally illustrated at 10 and comprises a microprocessor 12 coupled to random access memory (RAM) 14, ROM 16 and peripheral component interconnect (PCI) bridge 20 by processor bus 18. ROM 16 holds system BIOS (Basic Input Output System) and operating software, the BIOS interfacing between the operating software and the STB hardware. If desired, the BIOS ROM can instead be coupled to the processor via the low speed ISA bus 44. PCI bus 22 is driven by PCI bridge 20 and is suitable for high speed data transfer although it is slower than processor bus 18. Optionally, hard/floppy disk controller 26 and disk drive 28, and digital versatile disk (DVD) drive and controller 30 are coupled to the processor via the PCI bus 22. To the ISA bus is attached non-volatile RAM 32 for storing, for example, user input information; real time clock 34; smart card interface 36 for smartcard 37 and infrared control link device 38. Commands are issued to the set top box by the user using a hand held infrared remote control unit 40 or infrared keyboard 41 which communicates with control link device 38.

Industry standard architecture (ISA) bus 44 is coupled to PCI bus 22 by ISA bus bridge 42. The system is preferably provided with means to receive television programmes from a variety of sources such as broadcast programmes from satellite, cable and conventional terrestrial transmitters, video or near-video-on-demand (both referred to as NVOD) sources, and Web cast programmes from Internet-based sources. However, a simplified system may lack such receiving means and may instead control the television to display a desired programme, for example by transmitting infrared commands to the transmitter as though it were the television's remote control device; in this case IR module 38 may also be an IR transceiver.

In Figure 1, conventional tuner 60 has input 62 coupled to a terrestrial television aerial to receive terrestrially broadcast programmes; cable television receiver 56 has input 58 coupled to a cable TV network; satellite receiver 52 has input 54 coupled to a satellite receiving dish; and digital terrestrial receiver 57 has input 55 from a suitable terrestrial aerial. Telephony modem 46 (which may be a cable modem, or an International Subscriber Digital Network (ISDN) or and asymmetric digital subscriber line (ADSL) modem (or any suitable digital subscriber line device) is coupled to telephone line 50 to receive VOD/NVOD programmes. Digital programme receiving devices have their digital information stream output coupled to decode unit 66 (audio paths are not shown in Figure 1), which is also coupled to ISA bus 44 or PCI bus 22.

Television programmes may have associated data streams and the programme receiving means are therefore preferably provided with means to receive data and/or to extract data from received video signals which can, for example, be included in the vertical blanking interval (VBI) of a television signal. Since the ADSL connection provides a data channel, this can also be used for data communications. Such connections allow the system to handle data casting and to extract programme data such as broadcast channel identification information, time and date information and subtitles.

The apparatus is preferably configured to view programme video information and simultaneously browse the Web and carry out Web related activities, for example downloading software or information.

An audio and motion video compression module 64 is also coupled to bus 18 and may also be implemented in software. Data may be input to this to allow broadcast programmes to be recorded locally and made available for later viewing. The video data is compressed according to a standard format such as MPEG, Real Media or H323 and then stored as a compressed file on disk. Module 66 also includes corresponding decoding means to decompress the compressed video and audio. Optionally, the video compression and decompression can be performed by processor 12. The system is preferably operable to concurrently store a received programme and to play a stored programme by, for example, interleaving write and read-erase access cycles to the storage module's disk drive.

A video output carrying programme information, is coupled to the television via graphics adapter/video signal combiner 70 and modulator 72. If the television has a direct video input, modulator 72 may be omitted and the television 74 may be connected directly to video output via a SVGA socket, a SCART socket, S-Video socket, RCA phono plugs or other well known interfaces. Video RAM 70 is connected to the processor bus 18 and allows the system to generate graphics and combine them with the digital signal from video decode 66, for example using overlay or picture-in-picture modes, and can also output a video signal without any additional graphics. The system is configured to directly overlay text and/or graphics onto programme video and to achieve a similar result by overlaying a sparse Web page. This information can, for example, be used to provide further information about the programme or channel currently being viewed, for example information on "What's on next".

The system also includes an event detector module implemented in software to detect events in a programme video stream such as programme breaks within and/or between programmes. Such breaks or interruptions can be caused by commercial advertising or the interruption of other programmes for example news programmes. For example, in the U.K. a pair of vertical bars appears in the top right hand comer of the picture frame as a video switching mark shortly before a commercial break and the event detector is configurable to provide the video decode responsive to programme break detection. For digital transmissions, appropriate digital descriptor information is used to detect programme change.

Events can be determined by absolute and/or relative times, for example "at 10 p.m." or "five seconds after the start of the BMW (Registered Trade Mark) advert". Events, and the systems response to them, can be defined by extensions to HTML information associated with the relevant programmes. For example, in accordance with the recommendations of the Advanced Television Enhancement Forum (ATVEF) recommendations on proposed HTML extensions. The events and responses can also be transmitted in-band, for example in the VBI as a subtitle (the US EIA 746 standard) or in a digital video stream as a subtitle or as a separate event object in the data carousel, or even can be separately input via some other online connection.

The system is preferably equipped with bi-directional communications, so that information can be both received from and transmitted to remote apparatus. Thus cable receiving means 56, phone modem 46 are preferably all operable to transmit data as well as to receive programme and data information. Thus conventional Web-browser software in firmware may be employed to allow a user to interact with Web pages via the Internet, for example using IR remote control 40 to select hypertext links on Web pages displayed to the user by graphics adapter 70. Programme descriptor information can be displayed with selectable/clickable extensions and, more generally, Web-based electronic programme guide (EPG) information can be displayed. Although the operating system software has been described as being stored in ROM, it may be stored in non-volatile memory such as FLASH memory (EEPROM) whereby the system can be updated by downloading new software over one or other of the communication links, either when it becomes available or when a user pays to upgrade the system.

Also shown in Figure 1 is a database 76 remote from the set top box and comprising database storage means 78 and bi-directional communications link 80 for communication with the set top box (STB). Although shown remote from the apparatus, the programme database may be incorporated within the apparatus either in memory or on the local hard disk and generated from broadcast programme information. The database is provided with a software interface based on a standard protocol such as ODBC (Open Database Connectivity), for connection to other elements of the system. Again, although the database is illustratively shown as a unitary structure it could also comprise information held in a large number of disparate sources, for example electronic programme guides at various different Web page URL's. A further alternative is that the database is held remotely, as illustrated, with a copy of the database held locally in the set top box, for example, on disk or in the NVRAM and periodically updated by file transfer, for example, by telephone dial-up on demand or at a fixed time daily or by data insertion in the broadcast signal, for example overnight in in-band data such as VBI inserted data for analogue TV or as part of the data carousel for digital TV. Communication with the database can be by any conventional means, for example by phone modem 46 and/or a copy or partial copy of the database can be downloaded to the STB using the satellite 52, digital 57 and/or cable 56 receiver(s). The information held in the programme database is described in more detail below.

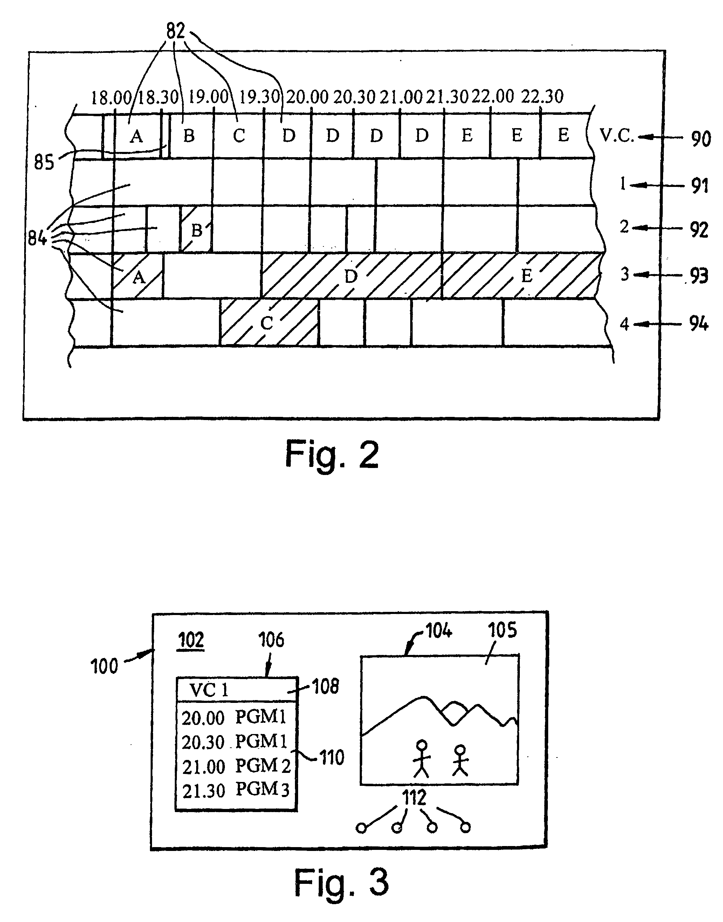

A virtual personal channel is a schedule of programmes which have been selected from programmes available from real channels or other programme sources (for example, Webcast programmes). The schedule is made up by selecting programmes from a variety of channels for showing in, preferably, defined time slots in the virtual channel. The concept of a virtual channel is illustrated diagrammatically in Figure 2. Figure 2 shows a virtual channel schedule 90 and schedules for four real channels, 91, 92, 93 and 94. The real "channels" may include cable, satellite, terrestrial and Web-cast television channels and NVOD programmes.

Illustratively the virtual channel 90 has a template structure with notional divisions at half hour intervals defining half hour time slots 82 for programme scheduling. Time slots of other lengths can also be defined and, more generally, a flexible structure can be adopted in which the time slots are of varying length, preferably with start and end times corresponding to start and end times of programmes on a real channel(s).

The real channels have programmes 84 of variable start time and duration scheduled as shown. In the illustrated example, the virtual channel schedule comprises five programmes, A, B, C, E and E during the interval 18:00 hours to 22:30 hours. Programme A is scheduled to occupy the slot from 18:00 hours 18:30 hours on the virtual channel; it is available on real channel 93 during the same interval and therefore a system for providing the virtual channel must select programme information from channel 93 for output during this time period.

The second time slot in the virtual channel begins at 18:30 hours and programme B, available on channel 92, is schedule for this time slot. Programme B ends at 19:00 hours, which corresponds with the end of the time slot on the virtual channel, but it starts after 18:30 hours, leaving a gap 85 in the virtual channel schedule. This gap may be filled either by programme material from channel 93 following programme A or by programme material from channel 92 preceding programme B, or by a supplementary programme material. Such supplementary material may comprise advertising from a standard source, material from a source defined by the virtual channel schedule information, or material from a source automatically chosen by the system according to available information (such as information describing the programmes in the virtual channel schedule or information describing or characterising a system user or user preferences). It may include material previously recorded on a local storage device. Since, by definition, VOD programmes are effectively available on-demand, gaps and overlaps in the virtual channel schedule can be adjusted by adjusting the start time of VOD programmes in the schedule.

Programme C from channel 94 is scheduled for the third illustrated half-hour time slot on the virtual channel, and programme D from channel 93 is scheduled for the following four time slots. It can be seen that programmes C and D overlap and, in the illustrated example, programme D has taken priority over programme C in the virtual channel schedule. Programme overlaps can be handled either by manually choosing which programme takes priority, or by pre-programmed rules. For example, the earlier or the later programme may always take precedence or rules can depend upon programme related information such as programme genre which allows rules such as "movies take priority over news" to be defined. In a preferred embodiment the system has a basic set of in-built rules which can be modified by the user.

As described above, when the set top box includes means to receive more than one programme at once and when it includes motion video storage means, overlapping programmes such as C and D may be scheduled at different times or to run consecutively. For example, programme C could be scheduled for both slots between 19:00 hours and 20:00 hours then, whilst, from 19:30 onwards C is being provided to the television, the initial half hour of D is recorded, and then after 20:00 hours the initial part of D is output to the television whilst the later part of D is concurrently recorded. This concurrent playback and recording is continued to move the end of programme D and the start of programme E to approximately 22:00 hours. The system is operable in a similar way to prevent a virtual channel schedule being disrupted by a programme which is broadcast at a later time (or an earlier time) than that at which it is initially described as being available. The actual broadcast time of a programme can be determined by video stream events and/or from data downloaded by the system and by concurrent recording and playback the whole schedule can be shifted back in time until a suitable gap or lower priority programme is encountered.

If desired, more than one consecutive programme from a real channel can be scheduled on the virtual channel, and in this case it is convenient to provide means whereby a user can map a portion of virtual channel 90 to a corresponding portion of a real channel. It is preferably also possible to fully map the virtual channel to a real channel so that, for example, virtual channel 90 may be defined as identical to real channel 93.

Although the scheduled entities have been referred to as programmes (video, audio or multimedia), other similar entities such as computer games, computer based learning activities and interactive telecommunication events may also be scheduled.

The information defining the virtual channel schedule comprises, at its most basic, an ordered list of programme entities. Associated with each entity is information specifying a real channel or other programme source, including other virtual channels, from which the channel entity is available. Preferably the virtual channel schedule information comprises, for each scheduled programme, information identifying the start time of the programme as well as information identifying a real channel on which the programme is available at that start time. Programme duration information may also be included. In the case of NVOD programmes the "real channel" information comprises NVOD programme source information.

The operating software in the ROM 16 of the set top box uses information defining the virtual channel schedule to control the set box top to provide the set scheduled programmes to output 74 to the television at the correct times. At a programme start time processor 12 selects the appropriate programme input means and real channel and logically couples the video stream to output 67 or the video switch and thence to the output 74 of the set top box. The video output is provided to the television so that the output video stream can be selected in the same way that other real channels on television are selected. In one embodiment the modulator 72 provides a UHF radio frequency output to the television and when the television is tuned to this frequency the programmes scheduled on the virtual channel are provided so that to a user the virtual channel is selectable so that it appears to another real channel.

Figure 3 shows an exemplary screen display 100 presented to the television user when the virtual channel is selected. The display comprises a background region 102, which may be plain or which may include logos and/or advertising material, and a picture-in-picture region 104 in which a currently selected video stream 105 is displayed. A programme information region 106 is provided with a header bar 108 identifying the currently selected virtual channel and a programme guide region 110 displaying a list of programmes and times. Predefined or soft menu buttons 112 are also provided for control of, *inter alia,* scheduling and electronic programme guide functions.

Screen display 100 may be downloaded as a Web page or may comprise locally generated graphics or may be a combination of these; if display 100 is a Web page, screen regions such as menu buttons 112 may include hypertext links to other Web pages. In a preferred embodiment, selecting region 108, for example by clicking on the region with a pointer, displays a list of channels including real and virtual channels; selecting region 110 changes the display of programme information, displaying programmes at other times and/or further information on a selected programme; and selecting region 105 expands the video to fill the screen.

The system includes input means to receive information, as described above, defining the virtual channel schedule. In a simple system, the input means comprises a communications device such as phone modem 46 or cable receiver 56 together with a software driver operating together to allow a schedule to be downloaded from a remote location such as a critic's choice Web page thus a user could, for example, download a newspaper's recommended choice of viewing for the evening. Smart card interface module 36 can similarly be used to load virtual channel schedules or personal channel descriptors from a user's or a published Smart card (i.e. a card incorporating a silicon chip data storage module).

Preferably the operating software includes software to allow a user to define a virtual channel schedule. For this mode of operation the system includes an interface means (hardware and/or software) to communicate with the programme database, as outlined above. To allow user scheduling of programmes the database must include programme time and channel information needed to construct the virtual/ personal channel schedule as well as information identifying the programmes to be scheduled, for example programme titles.

The database may be held locally or remotely from the apparatus, for example at a regional head-end delivery point. In cable systems with a permanent connection normal remote access protocols can be used to download the data via some out-of-band data path, for example using a cable modem. Alternatively, both a local and a remote database can be used, with the local database as a mirror of the remote master database.

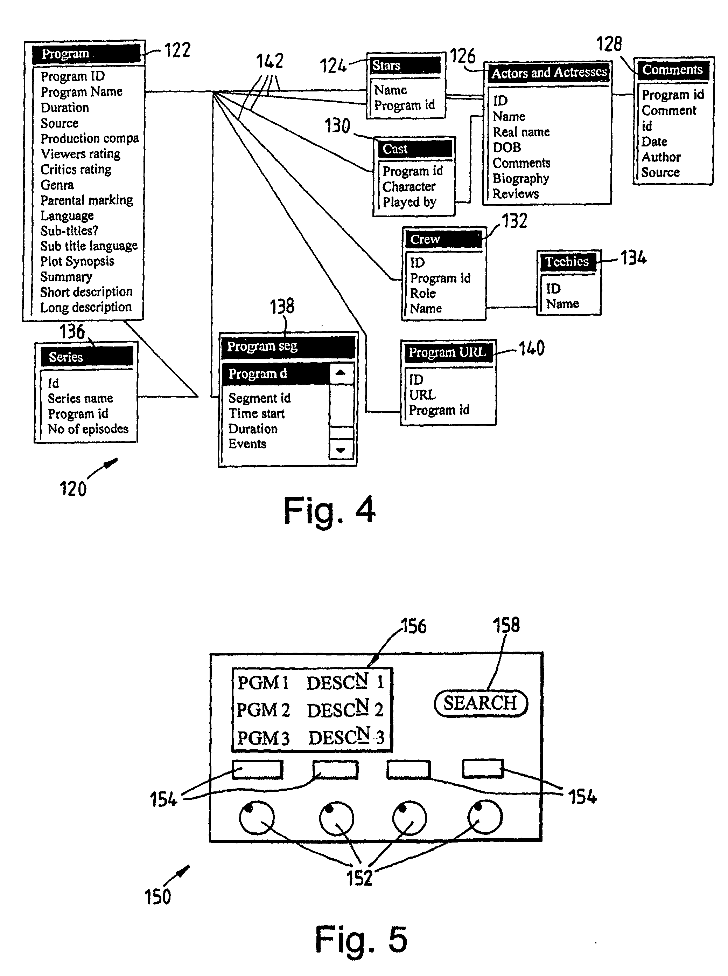

To allow the user to make an informed choice of programmes for scheduling the database preferably also comprises programme descriptor information characterising the content of the programmes in the database so that the user can search the database for programmes of a desired type or having specific features. Figure 4 shows an example schema 120 for a relational programme database. Associated with each programme in a "programme" table 122 are programme I.D., programme name, duration, source, production company, viewer's rating, critic's rating, genre, parental marking (age suitability/certification; violence or bad language; religion; nudity) language, indication of the presence of sub-titles, sub-title language, plot synopsis, summary, short description, long description, and other fields such as producer and director can also be included. Other illustrative linked tables include "stars" 124, "actors and actresses" 126, "comments" 128, "cast" 130, "crew" 132, "techies 134", "series 136", "programme segment" 138, "programme, and URLs" 140 (identifying, for example, an NVOD programme source). The links 142 between the tables in the relational database indicate which tables share data.

The data can be manually entered into the database or derived from a standard electronic programme guide feed or retrieved from broadcasters' or other Web pages using Web-spider search techniques or can be derived from a combination of these sources. If a Web-spider search engine is used, it is desirable that the EPG data to be collected by the Web-spider is published in a standard format so that the information corresponding to the various fields in the database can easily be located.

In an exemplary embodiment the Web-spider (which is essentially a software module) begins at a starting Web page, which may be predefined or manually entered. This page is searched for programme information for the database and for hypertext links to other Web pages, preferably using key words to identify the potentially most useful links. The search engine then either follows a single link to a new Web page where again electronic programme guide data and further hypertext links are gathered, or the software creates two or more separate tasks to follow a plurality of hypertext links simultaneously. In this way EPG data is gathered as the search engine works its way through a tree of hypertext links. When a dead end is reached the search engine works back up the tree until an unused link is found.

Although a notional tree of links is constructed, in reality there is no tree-like hierarchy amongst the Web pages searched and, theoretically, such a strategy allows virtually the entire Web to be searched. If desired, searching can be made more efficient by including a list of URLs or links to pages where it is known that EPG data is located, or to pages which are known to include links to useful EPG pages, and the search engine can be configured to search these first or to search to a limited depth from these predefined pages. Again, the predefined pages can, for example, be manually entered or downloaded from a manually updated source.

An exemplary embodiment of the system includes a user interface for definition of a personal virtual channel scheduled by the user and/or for tailoring or alteration of a predefined or downloaded virtual channel schedule. Figure 5 shows an exemplary screen display 150 for such a user interface, which allows the user to search the programme database according to user defined criteria and to display programmes matching the criteria, either for immediate showing, or for recording for later viewing. or for scheduling on a personal channel. User interface 150 for capturing the users input and displaying the results, can be a Web-browser extended for TV use, for example in accordance with the recommendations of the Advanced Television Enhancement Forum (ATVEF).

In the example, knobs 152 are used to dial up criteria which appear in display windows 154. Thus a first window may be used to select a genre such as a movie, the second window an associated theme such as "western", a third window, "stars" and a fourth window "John Wayne". A more advanced user interface can also include means to enter key words for word, name, subject, and /or title word searches to allow user for example, to make a request such as "I want to watch gardening programme about heritage tomatoes".

Example search criteria include programme name, star, genre (i.e. programme type such as movie, documentary, news bulletin), theme (e.g. western, comedy, gardening), key words and description, critic's/viewers' ratings, source or broadcast channel (e.g. BBC1), parental guidelines (e.g. "No nudity", or "before 9 p.m."), language.

The system operating software searches the database using standard database query techniques according to the user defined criteria. After the criteria has been dialled-up or entered, a list of programmes and related information (title, time, duration, description etc) appears in window 156 and button 158 can be used for additional searching/programme display.

The system can also include means to identify a current user of the set top box. In one embodiment this is provided by a login screen where a user name and password must be entered before other elements of the operating system can be accessed. Since the system is aware of the user's identity, the viewing and/or scheduling of programmes can be restricted in accordance with the current user. For example, channel descriptor bar 108 in Figure 3 can be selectable to list channels available to a current user. In an alternative embodiment, only one or a few users need enter a password and all the non-password protected users are subject to viewing/scheduling restrictions. This arrangement allows parental control guidelines to be set by a nominated user, such as the account holder, or other users of the set top box.

Parental control may include or exclude programmes with markings that indicate certain categories, such as nudity, violence, religion, bad language, gambling, alcohol or substance abuse, and all set time constraints, for example, "before 9 p.m.", or "not more than one hour per day or five hours per week". This is achieved by storing data linking a user identity (either a specific named user or a class such as "non-password user") with programme channel and/or descriptor information. If a number of personal channels are shared between a number of users, separate user defined sets of personal channels may also be specified.

The system may also include input means to receive other user information, in addition to user identity information; this may be stored locally or remotely. In particular, the system is capable of receiving preference information characterising a user's preferred programmes. This can be based on information directly entered by a user or on information characterising the user's history of usage of the system, for example, generalisations using AI (Artificial Intelligence) techniques, based upon locally stored viewing statistics. User entered preference information may describe explicit user preferences (for example, "I like westerns") or may be based upon more general information characterising the user, such as their socio-economic class. Preference information can also be derived from "voting", in which the user specifies programmes which have been enjoyed and/or disliked.

The system software preferably allows a user the option of making a personal channel schedule available for transmission to a remote destination. This allows targeted marketing by a service provider and the exchange of personal channel schedules, either explicitly defined or as preference data sets, to be exchanged between users in different locations, for example between friends and neighbours. Preferably schedule information can be downloaded to a Smart card which the user can then carry around, for example to allow the viewing of preferred personal channels on a hotel television. The Smart card need only carry the user's identity if the user's information is remotely accessible either from a home set top box or from a central database.

Where user preference information is accessible remotely, either by other users or by a designated third party, this information can be used to define a group of users sharing similar preferences, and by inference other similar characteristics. Thus the mutual overlap of preference information of a number of users can be determined and a group of users with a preference overlap exceeding a predetermined value can be defined. For example, the overlap of preference information of a first user with each of a number of other users can be calculated and those with more than a defined degree of commonality selected to form a user group. Alternatively the preference information of the first user can be replaced by specifically defined preference information relating to a notional first user rather than an actual user, (such as a set of preference values) whereby a user group with defined preferences can be identified.

Users may automatically be joined to the group or may be offered the option of joining. Once a group is defined, schedule information can be exchanged between similar users - for example, programme selections made by the majority of the group can be suggested to those members of the group not having previously made such a selection. Users who so elect can be put into communication with one another for other purposes - for example by exchange of e-mail addresses or by admission to an electronic chat session. User groups can be also used for marketing purposes such as targeting advertisements.

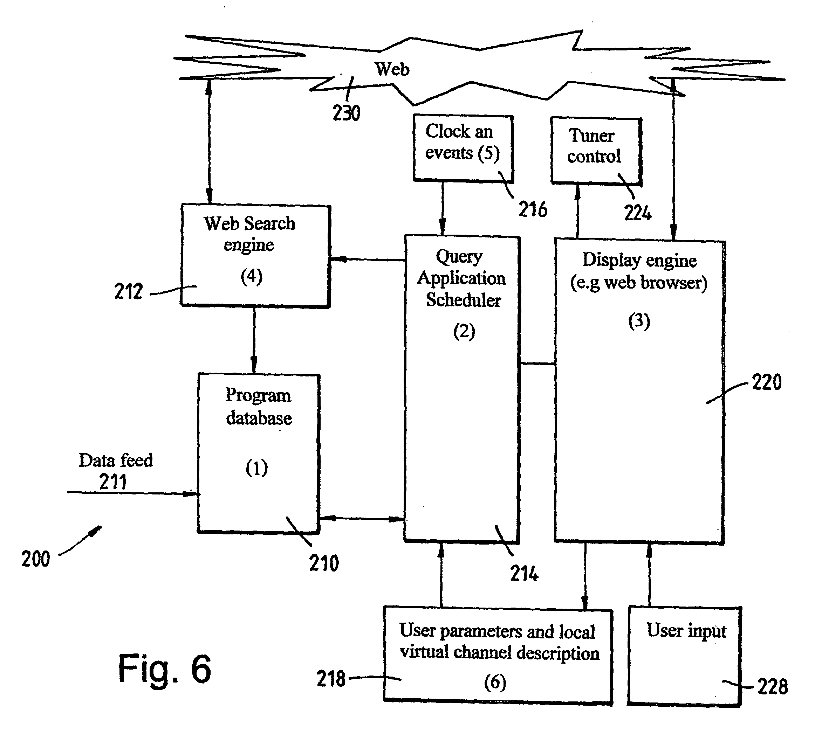

A block diagram 200 illustrating modules of the operating software of the system is shown in Figure 6. Programme database 210 receives data from Web-search engine 214 coupled to World Wide Web (Internet) 230, and also data from data feed 211. Personal channel scheduling is carried out by scheduler 214, which interacts with programme database 210, and controls Web-search engine 212. This receives inputs from real- time clock and events handling software drivers 216 and user preference information/parameters and personal channel description data from module 218.

The scheduler 214 also interacts with display engine 220, which controls the display of images on the television, and which preferably incorporates a Web-browser. The display engine interacts with tuner control module 224 to control the programme receiving means to provide programmes to the set top box output. It also receives user input from module 228 for scheduling programmes on a personal channel and for direct control of programmes provided to the television. Optionally a payment management module is also included to manage subscription payments to allow programme choices to be made from subscription channels, and to periodically download billing data for pay-per-view programmes.

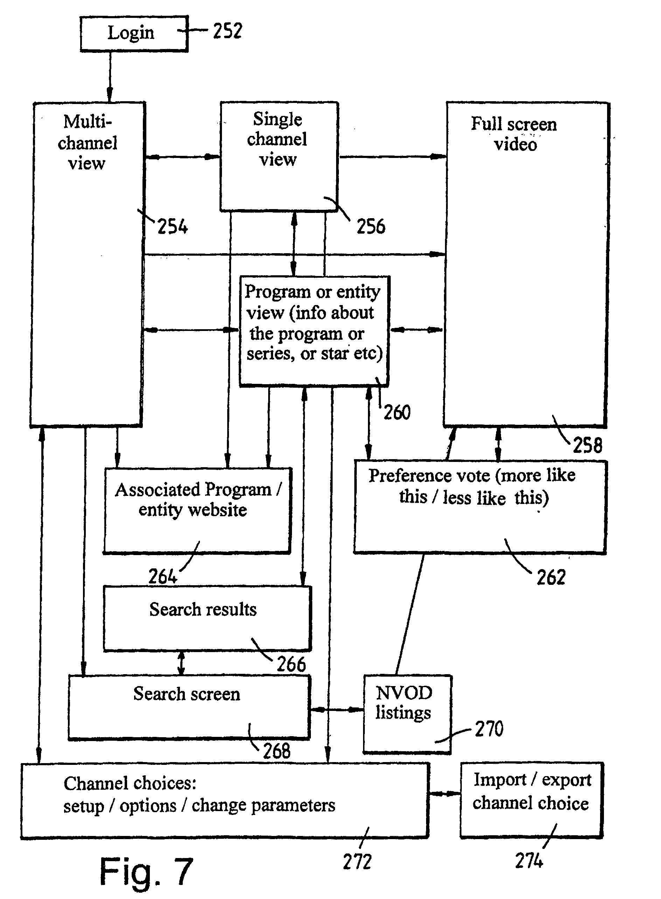

Figure 7 schematically shows elements of a user interface to the system and links between these elements which allow a user to navigate through the displayed menus and screens. The user enters at login screen 252 which, as described above, restricts access to the system. Once the user has successfully logged-on a multi-channel programme display 254 is presented in which the screen is divided into a number of small regions each of which displays a different programme. From this the user may navigate to a single channel view 256 similar to that of Figure 3, in which the user is presented with a single programme in a window on Web page, together with an electronic programme guide providing programme and time information. Selecting the video picture results in full screen video display 258.

From any one of screen displays 254, 256 and 258, additional information about a programme may be displayed - for example, a brief description and critic's comments - in screen view 260. From this screen and from the full screen video display the user can enter preference information and/or vote on screen 262 to indicate that more (or less) programmes of the type displayed are desired.

Associated programmes and/or Web sites providing further information relating to a programme may be accessed from screen 264 via the single 256 and multi-channel 254 view screens and programme information screen 260. Search screen 268 and search results screen 266 may be accessed as illustrated by the links shown, and also from NVOD listings screen 270. Further channel choices, including current user restrictions, user defined personal channel sets, system set-up options and user parameters may be accessed from screen 272; personal channel schedules may also be defined from this screen, and user and channel data may be imported and exported via screen 274.

A personal channel that produces consistently interesting viewing is likely to be of interest to other users. All that is needed to produce a personal channel on another STB is to duplicate channel settings, which constitute only a very small quantity of data. Preferably, a fixed, extendible format is defined for personal channel definition to facilitate distribution of personal channel settings between users, for example via e-mail or posting on websites. Such channels are also potentially a marketable commodity, for example they comprises settings favoured by a celebrity. Thus by downloading a personal channel a user can install a channel that "thinks" in the same way as a favourite TV critic, automatically selecting material in a way defined by the critic (or by the celebrity).

A user can be provided with means to indicate how well a given scheduled programme fits their expectations, and the weights of a personal channel can be adjusted according to the goodness of fit. Other programmes for scheduling can also be separately weighted according to any keywords they share with a selected programme which fits well with the user's expectations; in effect this allows a construction of a personal genre definition.

A user can be given the option of weighting programmes according to their popularity with either the general viewing public or with viewers of a similar usage/personality profile to their own. This can be achieved by, for example, storing details of the viewer or user profile on a server linked to a plurality of set top boxes.

By treating existing channels as genre definitions it is possible to set-up an evening's viewing schedule by remapping personal channels into other personal channels. This can provide a schedule such as an hour of programming from a personal news channel, followed by an hour from a personal entertainment channel, followed by something from a personal movie channel. Such a time-based personal channel can be extended to allow different personal channel time-defined "sets" or schedules to be defined on different days of the week or month to reflect differing viewing habits through a week or month or even year.

Advantageously a button is added to each scheduled programme to allow a user to perform one of several functions; to move it to a fixed list (virtual) channel (for example, to add it to tonight's viewing); to create a new personal channel based on keywords associated with the item or programme; to use keywords for the item in a search; and to set up a diary reminder for the item or programme.

An EPG preferably generates substantially seamless schedules of broadcast material. Such an arrangement can result in a need to fill a gap between two highly relevant programmes with material that is not strictly relevant but fits the gap. In such a situation advantageously a user can be provided with the option to decide what material is used for this "fill-in" purpose. Options include simply leaving a gap in the schedule; fill-in using NVOD material; fill-in using a favourite channel; fill-in using a previously recorded programme, using selection a database of the user's video collection; and fill-in with less relevant material.

Advantageously a multi-user or family mode can be provided for the system to allow the multi-channel view to display personal channels for each member of a family or group of people simultaneously. Preferably, a user has the option of personalising the user interface to change the colour scheme and/or graphics used, to provide a sense of ownership and individuality.

By monitoring a user's user profile and/or channel settings and/or diary items, for example downloading information from the STB to a server as described in connection with weighting according to popularity above, it is possible to build up a personality profile of a user. This can be advantageously used to, for example, target advertising of items of specific interest to the user, either by switching between broadcast channels appropriately or by downloading specific adverts, for example, overnight or together with downloaded schedule information.

Although the method has been described in the context of scheduling television programmes, the system is also usable in the context of scheduling any type of programme entity, including digital music/audio programmes and computer games.

Many other effective alternatives will occur to those skilled in the art and it is to be understood that the invention is not limited to the described embodiments.

## Claims

1. A method of identifying a group of users of an EPG system sharing similar characteristics to a first user;
the EPG system being for providing a home entertainment device (74) with a personal channel comprising a schedule of programmes and corresponding start times, the programmes being selected from programmes available from a plurality of real channels and/or other programme sources, the system including means (40) for a user to choose a programme for scheduling;
the method comprising the steps of:
i) adding the first user to the group;
ii) receiving programme choice information from the first user;
iii) receiving programme choice information from another user;
iv) comparing the programme choice information of the first user with that of the other user to determine an overlap;
v) if the overlap exceeds a predetermined value, adding the other user to the group; and
vi) repeating steps (iii) to (v) to build up the group of users.

2. A method of identifying a group of users of an apparatus (10) sharing similar characteristics to a first user;
the apparatus being for providing a home entertainment device (74) with a personal channel comprising a schedule of programmes and corresponding start times, the programmes being selected from programmes available on a plurality of real channels and/or other programme sources; the apparatus including data input/output means (46) to transmit and receive channel schedule and/or preference information to and from a destination remote from the apparatus, and input means (40) , to receive preference information characterising a user's preferred programmes;
the method comprising the steps of:
i) adding the first user to the group;
ii) receiving preference information from the first user;
iii) receiving preference information from another user;
iv) comparing the preference information of the first user with that of the other user to determine a preference overlap;
v) if the preference overlap exceeds a predetermined value, adding the other user to the group; and
vi) repeating steps (iii) to (v) to build up the group of users.

3. A method as claimed in claim 1 or claim 2 wherein the first user programme choice or preference information is replaced by predetermined user choice or preference information whereby a group of users sharing at least a portion of the predetermined information is identifiable.

4. A method of generating a personal channel schedule comprising the steps of:
i) identifying a group of users according to the method of any preceding claim;
ii) identifying a programme choice made by a majority of users in the group;
iv) comparing the preference information of the first user with that of the other user to determine a preference overlap;
v) if the preference overlap exceeds a predetermined value, adding the other user to the group; and
vi) repeating steps (iii) to (v) to build up the group of users.

5. A method as claimed in any preceding claim further comprising the step of providing an e-mail address of one of the users in the group to others of the users in the group.

6. A computer program to, when running, carry out the method of any preceding claim.

7. The computer program of claim 6, stored on a computer-readable medium.

## Patentansprüche

1. Verfahren zum Identifizieren einer Gruppe von Benutzern eines EPG-Systems, die ähnliche Charakteristiken wie ein erster Benutzer gemeinsam verwenden:
wobei das EPG-System vorgesehen ist, um eine Heimunterhaltungseinrichtung (74) mit einem persönlichen Kanal zu versehen, der eine Planung von Programmen und entsprechende Startzeiten umfasst, wobei die Programme aus Programmen, die aus einer Vielzahl von echten Kanälen und/oder anderen Programmquellen verfügbar sind, gewählt werden, wobei das System eine Einrichtung (40) für einen Benutzer zum Wählen eines Programms für eine Planung einschließt;
wobei das Verfahren die folgenden Schritte umfasst:
i) Hinzufügen des ersten Benutzers zu der Gruppe;
ii) Empfangen einer Programmwählinformation von dem ersten Benutzer;
iii) Empfangen einer Programmwählinformation von einem anderen Benutzer;
iv) Vergleichen der Programmwählinformation des ersten Benutzers mit derjenigen des anderen Benutzers, um eine Überlappung zu bestimmen;
v) wenn die Überlappung einen vorgegebenen Wert übersteigt, Hinzufügen des anderen Benutzers zu der Gruppe; und
vi) Wiederholen der Schritte (iii) bis (v), um die Gruppe von Benutzern aufzubauen.

2. Verfahren zum Identifizieren einer Gruppe von Benutzern einer Vorrichtung (10), die ähnliche Charakteristiken wie ein erster Benutzer gemeinsam verwenden;
wobei die Vorrichtung vorgesehen ist, um eine Heimunterhaltungseinrichtung (74) mit einem persönlichen Kanal zu versehen, der eine Planung von Programmen und entsprechende Startzeiten umfasst, wobei die Programme aus Programmen, die auf einer Vielzahl von echten Kanälen verfügbar sind und/oder anderen Programmquellen gewählt sind; wobei die Vorrichtung eine Dateneingabe/Ausgabe-Einrichtung (46) zum Senden und Empfangen einer Kanalplanungs- und/oder Präferenz-Information an eine und von einer Zielstelle, die von der Vorrichtung entfernt ist, und eine Eingabeeinrichtung (40) zum Empfangen einer Präferenz-Information, die bevorzugte Programme eines Benutzers charakterisiert, einschließt;
wobei das Verfahren die folgenden Schritte umfasst:
i) Hinzufügen des ersten Benutzers zu der Gruppe;
ii) Empfangen einer Präferenz-Information von dem ersten Benutzer;
iii) Empfangen einer Präferenz-Information von einem anderen Benutzer;
iv) Vergleichen der Präferenz-Information des ersten Benutzers mit derjenigen des anderen Benutzers, um eine Präferenz-Überlappung zu bestimmen;
v) wenn die Präferenz-Überlappung einen vorgegebenen Wert übersteigt, Hinzufügen des anderen Benutzers zu der Gruppe; und
vi) Wiederholen der Schritte (iii) bis (v), um die Gruppe von Benutzern aufzubauen.

3. Verfahren nach Anspruch 1 oder Anspruch 2, wobei die Programmauswahl oder die Präferenz-Information des ersten Benutzers durch eine Wähl- oder Präferenz-Information eines vorgegebenen Benutzers ersetzt wird, wodurch eine Gruppe von Benutzern, die wenigstens einen Teil der vorgegebenen Information gemeinsam verwenden, identifizierbar ist.

4. Verfahren zum Erzeugen einer Planung eines persönlichen Kanals, umfassend die folgenden Schritte:
i) Identifizieren einer Gruppe von Benutzern in Übereinstimmung mit dem Verfahren von irgendeinem vorangehenden Anspruch;
ii) Identifizieren einer Programmauswahl, die von einer Mehrzahl von Benutzern in der Gruppe durchgeführt wird;
iv) Vergleichen der Präferenz-Information des ersten Benutzers mit derjenigen des anderen Benutzers, um eine Präferenz-Überlappung zu bestimmen;
v) wenn die Präferenz-Überlappung einen vorgegebenen Wert übersteigt, Hinzufügen des anderen Benutzers zu der Gruppe; und
vi) Wiederholen der Schritte (ii) bis (v), um die Gruppe von Benutzern aufzubauen.

5. Verfahren nach irgendeinem vorangehenden Anspruch, ferner umfassend den Schritt zum Bereitstellen einer Email-Adresse von einem der Benutzer in der Gruppe an andere der Benutzer in der Gruppe.

6. Computerprogramm, um dann wenn es ablaufen gelassen wird, das Verfahren nach irgendeinem vorangehenden Anspruch auszuführen.

7. Computerprogramm nach Anspruch 6, das auf einem Medium gespeichert ist, das von einem Computer lesbar ist.

## Revendications

1. Procédé d'identification d'un groupe d'utilisateurs d'un système EPG qui partagent des caractéristiques similaires par rapport à un premier utilisateur,
le système EPG étant prévu pour munir un dispositif de distraction domestique (74) d'un canal personnel qui comprend une planification de programmes et de temps de début correspondants, les programmes étant sélectionnés parmi des programmes disponibles à partir d'une pluralités de canaux réels et/ou d'autres sources de programme, le système incluant un moyen (40) pour qu'un utilisateur choisisse un programme pour une planification.
le procédé comprenant les étapes de:
i) ajout du premier utilisateur au groupe;
ii) réception d'une information de choix de programme en provenance du premier utilisateur;
iii) réception d'une information de choix de programme en provenance d'un autre utilisateur;
iv) comparaison de l'information de choix de programme du premier utilisateur avec celle de l'autre utilisateur pour déterminer un chevauchement;
v) si le chevauchement excède une valeur prédéterminée, ajout de l'autre utilisateur au groupe; et
vi) répétition des étapes (iii) à (v) pour construire le groupe d'utilisateurs.

2. Procédé d'identification d'un groupe d'utilisateurs d'un appareil (10) qui partagent des caractéristiques similaires par rapport à un premier utilisateur,
l'appareil étant prévu pour munir un dispositif de distraction domestique (74) d'un canal personnel qui comprend une planification de programmes et de temps de début correspondants, les programmes étant sélectionnés parmi des programme disponibles sur une pluralités de canaux réels et/ou d'autres sources de programme, l'appareil incluant un moyen d'entrée/sortie de données (46) pour émettre et recevoir une planification de canaux et/ou une information de préférence sur et depuis une destination à distance de l'appareil, et un moyen d'entrée (40), pour recevoir une information de préférence qui caractérise un programme préféré d'utilisateur,
le procédé comprenant les étapes de:
i) ajout du premier utilisateur au groupe;
ii) réception d'une information de préférence en provenance du premier utilisateur;
iii) réception d'une information de préférence en provenance d'un autre utilisateur;
iv) comparaison de l'information de préférence du premier utilisateur avec celle de l'autre utilisateur pour déterminer un chevauchement de préférences;
v) si le chevauchement de préférences excède une valeur prédéterminée, ajout de l'autre utilisateur au groupe; et
vi) répétition des étapes (iii) à (v) pour construire le groupe d'utilisateurs.

3. Procédé selon la revendication 1 ou. 2, dans lequel le choix de programme ou l'information de préférence de premier utilisateur est remplacé(e) par un choix ou une information de préférence d'utilisateur prédéterminé(e) et ainsi, un groupe d'utilisateurs qui partagent au moins une partie de l'information prédéterminée est identifiable.

4. Procédé de génération d'une planification de canaux personnels, comprenant les étapes de:
i) identification d'un groupe d'utilisateurs selon le procédé selon l'une quelconque des revendications précédentes;
ii) identification d'un choix de programme réalisé par une majorité d'utilisateurs dans le groupe;
iv) comparaison de l'information de préférence du premier utilisateur avec celle de l'autre utilisateur pour déterminer un chevauchement de préférences;
v) si le chevauchement de préférences excède une valeur prédéterminée, ajout de l'autre utilisateur au groupe; et
vi) répétition des étapes (ii) à (v) pour construire le groupe d'utilisateurs.

5. Procédé selon l'une quelconque des revendications précédentes, comprenant en outre l'étape de foumiture d'une adresse de courriel ou courrier électronique de l'un des utilisateurs dans le groupe à d'autres des utilisateurs dans le groupe.

6. Programme d'ordinateur pour, lorsqu'il est déroulé, mettre en oeuvre le procédé selon l'une quelconque des revendications précédentes.

7. Programme d'ordinateur selon la revendication 6, stocké sur un support lisible par ordinateur.
